# FASCICULE DE BREVET EUROPEEN

(11) **EP 2 625 048 B1**
(45) Date de publication et mention de la délivrance du brevet: **24.06.2015**
(21) Numéro de dépôt: 11761651.6
(22) Date de dépôt: 09.09.2011
(51) Int. Cl.: B60B 5/02, B60B 33/00, B60B 1/00

(54) **ROULETTE AMORTISSEUR**
STOSSDÄMPFERROLLE
SHOCK-ABSORBING CASTOR

(30) Priorité: 08.10.2010 FR 1003989
(43) Date de publication de la demande: 14.08.2013
(73) Titulaire: Tente Roulettes Polymeres - Bruandet, 39700 La Barre (FR)
(72) Inventeur: DAYT, Patrick, F-25000 Besançon (FR); MARCHAND, Christian, F-25320 Torpes (FR)
(74) Mandataire: Flavenot, Bernard
(86) Numéro de dépôt international: PCT/FR2011/000497
(87) Numéro de publication internationale: WO 2012/045921

(56) Documents cités:
- WO-A1-2006/053589
- DE-A1- 2 937 571
- GB-A- 2 229 914

## Description

La présente invention concerne les roulettes destinées à être associées à tout objet du type meuble, au sens large, pour faciliter son déplacement sur une surface de sol, par exemple les roulettes qui trouvent une application pour le déplacement du matériel et du mobilier hospitaliers, lits, tables roulantes, fauteuils, chariots, déambulateurs, et aussi les roulettes pour le déplacement de valises, bagages ou analogues.

Une telle roulette comporte essentiellement au moins une roue, généralement deux roues, un carter destiné à supporter et protéger les roues et un pivot qui assure la liaison entre le carter et le meuble.

Sa structure doit être conçue de façon qu'elle permette un déplacement facile, et dans toutes les directions, du meuble auquel elle est associée.

Pour cela elle comporte généralement deux roues montées parallèles, des moyens pour permettre à ces deux roues de tourner autour d'un arbre horizontal par rapport au carter dans le but de rouler sur le sol pour assurer le déplacement du meuble en translation rectiligne, ainsi que des moyens pour que le carter puisse être lié au meuble ou analogue et éventuellement pivoter autour d'un axe sensiblement vertical par rapport au meuble pour permettre à la roulette de prendre toutes directions par rapport au meuble et donc pour pouvoir facilement diriger ce meuble en suivant des courbes.

Quand ces roulettes sont utilisées, par exemple en milieu hospitalier ou analogue, pour déplacer un meuble transportant un patient ou des objets comme des instruments, produits divers et autre matériel médical relativement fragiles, il est préférable de ne pas soumettre le patient ou ces objets à des chocs trop importants, par exemple lorsque le meuble est déplacé sur une surface de sol présentant des discontinuités comme les seuils de certaines portes, par exemple les portes coupe-feu ou analogues. Il est donc avantageux que les roulettes puissent au moins partiellement amortir ces chocs. Il en est de même pour les bagages ou analogues associés à ces roulettes.

Il est également préférable que ces roulettes ne fassent pas trop de bruit lorsqu'elles roulent sur la surface de sol, notamment en milieu hospitalier ou analogue pour la tranquillité des patients hospitalisés, ou en tout autre endroit dans le cas de déplacement de valises, bagages ou analogues.

Il est déjà connu une roulette avec amortisseur comme celle qui est décrite et illustrée dans le DE-2937571. Cette roulette comporte essentiellement un carter constitué d'une première portion et d'une seconde portion respectivement réalisées dans deux matériaux de souplesse différente, la seconde portion qui est réalisée dans le matériau de plus grande souplesse étant celle qui constitue le palier pour l'arbre de la roue. Cette seconde portion en caoutchouc est fixée à la première par une goupille et ne peut donc pas être moulée avec la première portion.

La présente invention a pour but de réaliser une roulette qui tente d'atteindre les buts mentionnés ci-dessus, en présentant une structure simple, peu onéreuse et facile à réaliser et/ou fabriquer et tout en donnant un résultat d'amortissement aussi bon que celui notamment de la roulette définie ci-dessus, mais sans en avoir les inconvénients

Plus précisément, la présente invention a pour objet une roulette apte à rouler sur une surface, ayant notamment les caractéristiques énoncées dans la revendication 1 annexée.

D'autres caractéristiques et avantages de l'invention apparaîtront au cours de la description suivante donnée en regard des dessins annexés à titre illustratif mais nullement limitatif, dans lesquels :
La figure 1 est une vue en coupe de côté d'un mode de réalisation de la roulette selon l'invention, et
La figure 2 est une vue en perspective, en éclaté et partiellement en écorché, du même mode de réalisation de la roulette selon l'invention que celui représenté en coupe sur la figure 1.

En référence aux deux figures annexées, la présente invention concerne une roulette apte à rouler sur une surface Sd.

Une telle roulette comprend un carter 10 constitué d'une pièce 11 obtenue par moulage, présentant une forme générale de demi-cylindre de révolution. Un tel carter est bien connu en lui-même et ne sera pas plus amplement décrit ici, le contenu des figures étant suffisant pour le définir aux yeux d'un homme du métier.

La pièce 11 comporte au moins un logement 13 apte à recevoir un pivot 14 et défini selon un premier axe 15, et un palier 16 pour arbre de rotation, ce palier étant défini selon un second axe 17 sensiblement perpendiculaire au premier axe et sensiblement parallèle à la surface Sd, sachant qu'un tel palier est constitué par une surface de forme générale cylindrique de révolution délimitant un orifice axial dans lequel est apte à être introduit un arbre de rotation d'au moins une roue.

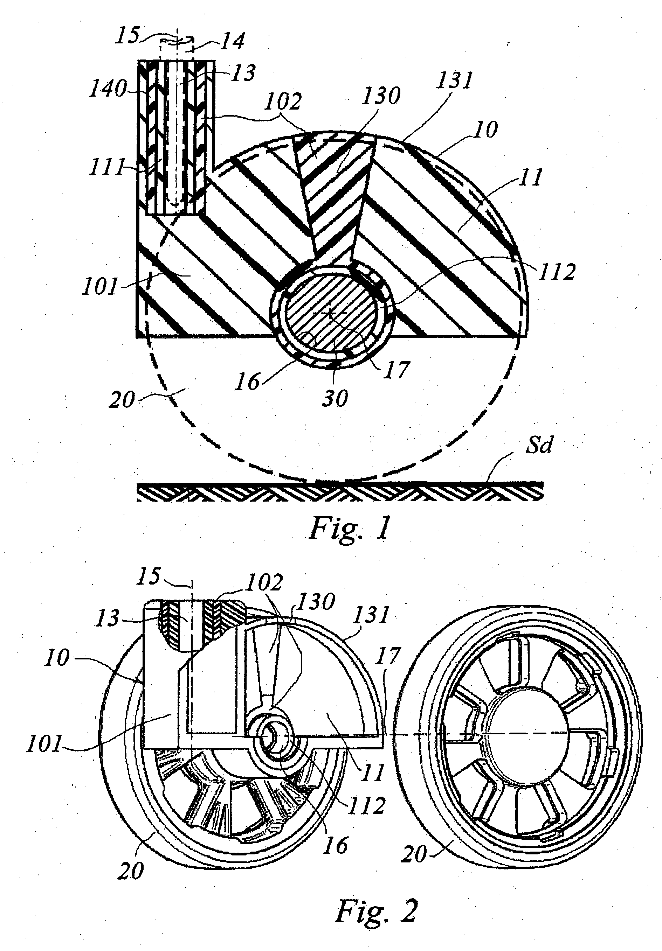

La roulette comporte au moins une roue 20, plus généralement deux comme visible sur la figure 2, apte à prendre contact par roulement avec la surface Sd, et un arbre de rotation 30 monté en coopération dans le palier 16, la roue 20 étant montée en association avec l'arbre de rotation.

Il est à souligner que tous les modes de montage des éléments décrits ci-dessus sont possibles : soit l'arbre est solidaire de la ou des roues et est monté rotatif dans le palier, soit l'arbre est solidaire du palier et est monté rotatif dans la roue, soit, ce qui est plus rare, l'arbre est monté rotatif à la fois dans le palier et dans la ou les roues. Ces modes de montage sont du domaine de l'homme du métier et ne seront pas plus amplement décrits ici.

Selon une caractéristique importante de l'invention, la pièce 11 est constituée d'au moins une première partie 101 et une seconde partie 102 réalisées respectivement dans deux matériaux de souplesse différente, la seconde partie 102 étant celle qui est réalisée dans le matériau présentant la plus grande souplesse et étant interposée entre le logement 13 et l'orifice axial du palier 16, de façon à isoler le logement et le palier l'un de l'autre pour réaliser au moins partiellement au moins l'un des deux effets suivants : isolation phonique, amortissement des chocs sur les roues.

Selon une réalisation avantageuse, comme celle qui est illustrée sur les deux figures, la première partie 101 comporte une première portion 111 et une seconde portion 112, la première portion 111 dans laquelle est réalisé le logement 13 étant interposée entre ce logement 13 et la seconde partie 102, c'est-à-dire celle qui est dans le matériau présentant la plus grande souplesse, la seconde portion 112 dans laquelle est réalisé le palier 16 étant interposée entre l'orifice axial de ce palier 16 et cette même seconde partie 102.

Par exemple, de façon préférentielle, comme illustré sur les figures 1 et 2, la seconde portion 112 a la forme d'une douille dont l'orifice central constitue l'orifice axial du palier 16 défini ci-avant et la seconde partie 102 est alors sous la forme d'un manchon qui entoure cette douille.

De plus, comme l'amortissement des chocs peut se faire par une légère déformation du manchon, cette déformation aura tendance à entraîner une rotation, dans un sens ou dans l'autre, et l'une par rapport à l'autre, des deux parties du carter qui se trouvent de part et d'autre du plan contenant le second axe 17 et perpendiculaire à la surface Sd. Il est donc très avantageux, comme illustré sur les figures, que la seconde partie 102 comporte en outre, pour améliorer l'amortissement des chocs, une paroi 130 reliant sans discontinuité le manchon et la périphérie 131 de la pièce 11. De façon très préférentielle, cette paroi 130 a sensiblement la forme d'un tronc de coin dont la petite base est solidaire du manchon, comme représenté sur les figures.

De façon préférentielle, cette paroi 130 est en outre sensiblement située dans le plan défini ci-dessus.

Il est aussi avantageusement possible que, en combinaison ou non avec la réalisation ci-dessus, la seconde partie 102 soit constituée d'un insert cylindrique 140 entourant au contact la première portion 111 pour obtenir à la fois un amortissement des chocs et un amortissement phonique au niveau des vibrations qui peuvent être transmises par le pivot 14 qui est généralement métallique et donc relativement rigide et bon transmetteur de vibrations.

Selon une réalisation préférentielle qui donne de relativement bons résultats, la première partie 101 est en polyamide et la seconde partie 102 en polyuréthane. La pièce 11 sera aisément réalisée en une seule fois selon la technique dite "par moulage bi-injection", bien connue en elle-même.

Enfin, de façon très avantageuse, la roulette selon l'invention comprendra, en combinaison :
- un carter 10 constitué d'une pièce 11 obtenue par moulage, la pièce comportant au moins :
   * un logement 13 apte à recevoir un pivot 14 et défini selon un premier axe 15, et
   * un palier 16 pour arbre de rotation, le palier étant défini selon un second axe 17 sensiblement perpendiculaire au premier axe et sensiblement parallèle à la surface Sd,
- au moins une roue 20 apte à prendre contact par roulement avec la surface Sd, et
- un arbre de rotation 30 monté en coopération dans le palier 16, la roue 20 étant montée en association avec l'arbre de rotation.

La pièce 11 est constituée d'au moins deux première et seconde parties 101, 102 réalisées respectivement dans deux matériaux de souplesse différente, la seconde partie 102 étant celle qui est réalisée dans le matériau présentant la plus grande souplesse et étant interposée entre le logement 13 et l'orifice axial du palier 16 de façon à les isoler l'un de l'autre.

Quant à la première partie 101, elle comporte :
* une première portion 111 dans laquelle est réalisé le logement 13, cette première portion 111 étant interposée entre le logement 13 et la seconde partie 102, et
* une seconde portion 112 dans laquelle est réalisé le palier 16, la seconde portion 112 étant interposée entre l'orifice axial du palier 16 et la seconde partie 102, cette seconde portion 112 ayant la forme d'une douille dont l'orifice central constitue l'orifice axial du palier 16.

La seconde partie 102 comporte:
* un manchon entourant la douille,
* une paroi 130 reliant sans discontinuité le manchon et la périphérie 131 de la pièce 11, et présentant la forme d'un tronc de coin dont la petite base est solidaire du manchon, et
* un insert cylindrique 140 entourant au contact la première portion 111.

Dans ce mode de réalisation, la première partie 101 est en polyamide et la seconde partie 102 en polyuréthane, la pièce 11 étant obtenue par moulage bi-injection de ces deux matériaux.

## Revendications

1. Roulette apte à rouler sur une surface (Sd), comprenant :
• un carter (10) constitué d'une pièce (11) obtenue par moulage, ladite pièce comportant au moins :
* un logement (13) apte à recevoir un pivot (14) et défini selon un premier axe (15), et
* un palier 16 pour arbre de rotation, ledit palier étant défini selon un second axe (17) sensiblement perpendiculaire au premier axe et sensiblement parallèle à ladite surface (Sd), ledit palier (16) étant défini par une surface de forme générale cylindrique de révolution délimitant un orifice axial,
• au moins une roue (20) apte à prendre contact par roulement avec ladite surface (Sd), et
• un arbre de rotation (30) monté en coopération dans ledit palier (16), ladite roue (20) étant montée en association avec ledit arbre de rotation, **caractérisée par le fait que** ladite pièce (11) est constituée d'au moins une première partie (101) et une seconde partie (102) réalisées respectivement dans deux matériaux de souplesse différente, la seconde partie (102) étant celle qui est réalisée dans le matériau présentant la plus grande souplesse et étant interposée entre le logement (13) et l'orifice axial du dit palier (16) de façon à isoler l'un de l'autre le logement et le palier.

2. Roulette selon la revendication 1, **caractérisée par le fait que** ladite première partie (101) comporte une première portion (111) dans laquelle est réalisé ledit logement (13), cette première portion (111) étant interposée entre ledit logement (13) et ladite seconde partie (102), et une seconde portion (112) dans laquelle est réalisé ledit palier (16), la seconde portion (112) étant interposée entre l'orifice axial du dit palier (16) et la seconde partie (102).

3. Roulette selon la revendication 2, **caractérisée par le fait que** la seconde portion (112) a la forme d'une douille dont l'orifice central constitue l'orifice axial du palier (16) et que ladite seconde partie (102) a la forme d'un manchon entourant ladite douille.

4. Roulette selon la revendication 3, **caractérisée par le fait que** la seconde partie (102) comporte en outre une paroi (130) reliant sans discontinuité ledit manchon et la périphérie (131) de ladite pièce (11).

5. Roulette selon la revendication 4, **caractérisée par le fait que** ladite paroi (130) a sensiblement la forme d'un tronc de coin dont la petite base est solidaire du manchon.

6. Roulette selon la revendication 2, **caractérisée par le fait que** ladite seconde partie (102) est constituée d'un insert cylindrique (140) entourant au contact ladite première portion (111).

7. Roulette selon l'une des revendications précédentes, **caractérisée par le fait que** ladite première partie (101) est en polyamide et la seconde partie (102) en polyuréthane.

8. Roulette selon l'une des revendications précédentes, **caractérisée par le fait que** la pièce (11) est obtenue par moulage bi-injection.

9. Roulette selon la revendication 1, **caractérisée par le fait que** :
• ladite première partie (101) comporte :
* une première portion (111) dans laquelle est réalisé ledit logement (13), cette première portion (111) étant interposée entre ledit logement (13) et ladite seconde partie (102), et
* une seconde portion (112) dans laquelle est réalisé ledit palier (16), la seconde portion (112) étant interposée entre l'orifice axial du dit palier (16) et la seconde partie (102), et ayant la forme d'une douille dont l'orifice central constitue l'orifice axial du dit palier (16),
• ladite seconde partie (102) comporte :
* un manchon entourant ladite douille,
* une paroi (130) reliant sans discontinuité ledit manchon et la périphérie (131) de ladite pièce (11), ladite paroi présentant sensiblement la forme d'un tronc de coin dont la petite base est solidaire du manchon, et
* un insert cylindrique (140) entourant au contact ladite première portion (111), et
• ladite première partie (101) étant en polyamide et la seconde partie (102) en polyuréthane, ladite pièce (11) est obtenue par moulage bi-injection de ces deux matériaux.

## Patentansprüche

1. Rolle, die auf einer Oberfläche (Sd) rollen kann und Folgendes umfasst:
• ein Gehäuse (10), das aus einem durch Gießformen erhaltenen Teil (11) gebildet ist, wobei das Teil wenigstens umfasst:
* einen Aufnahmesitz (13), der einen Drehzapfen (14) aufnehmen kann und längs einer ersten Achse (15) definiert ist, und
* ein Lager (16) für eine Drehwelle, wobei das Lager längs einer zweiten Achse (17) definiert ist, die zu der ersten Achse im Wesentlichen senkrecht und zu der Oberfläche (Sd) im Wesentlichen parallel ist, wobei das Lager (16) durch eine Oberfläche mit allgemein zylindrischer, rotationssymmetrischer Form, die eine axiale Öffnung begrenzt, definiert ist,
• wenigstens ein Rad (20), das durch Rollen mit der Oberfläche (Sd) einen Kontakt herstellen kann, und
• eine Drehwelle (30), die zusammenwirkend mit dem Lager (16) montiert ist, wobei das Rad (20) in Zuordnung zu der Drehwelle montiert ist,
**dadurch gekennzeichnet, dass** das Teil (11) aus wenigstens einem ersten Abschnitt (101) und einem zweiten Abschnitt (102) gebildet ist, die aus zwei Materialien mit verschiedener Nachgiebigkeit verwirklicht sind, wobei der zweite Abschnitt (102) jener ist, der aus dem Material verwirklicht ist, das die größte Nachgiebigkeit aufweist, und zwischen den Aufnahmesitz (13) und die axiale Öffnung des Lagers (16) in der Weise eingefügt ist, dass der Aufnahmesitz und das Lager voneinander isoliert sind.

2. Rolle nach Anspruch 1, **dadurch gekennzeichnet, dass** der erste Abschnitt (101) einen ersten Bereich (111) aufweist, in dem der Aufnahmesitz (13) verwirklicht ist, wobei dieser erste Bereich (111) zwischen den Aufnahmesitz (13) und den zweiten Teil (102) eingefügt ist und einen zweiten Bereich (112) aufweist, in dem das Lager (16) verwirklicht ist, wobei der zweite Bereich (112) zwischen die axiale Öffnung des Lagers (16) und den zweiten Teil (102) eingefügt ist.

3. Rolle nach Anspruch 2, **dadurch gekennzeichnet, dass** der zweite Bereich (112) die Form einer Hülse hat, deren mittige Öffnung die axiale Öffnung des Lagers (16) bildet, und dass der zweite Abschnitt (102) die Form einer Muffe hat, die die Hülse umgibt.

4. Rolle nach Anspruch 3, **dadurch gekennzeichnet, dass** der zweite Abschnitt (102) außerdem eine Wand (130) umfasst, die die Muffe und den Umfang (131) des Teils (11) ohne Unterbrechung verbindet.

5. Rolle nach Anspruch 4, **dadurch gekennzeichnet, dass** die Wand (130) im Wesentlichen die Form eines Eckkeils hat, dessen kleine Basis mit der Muffe fest verbunden ist.

6. Rolle nach Anspruch 2, **dadurch gekennzeichnet, dass** der zweite Abschnitt (102) aus einem zylindrischen Einsatz (140) gebildet ist, der den ersten Bereich (111) in Kontakt umgibt.

7. Rolle nach einem der vorhergehenden Ansprüche, **dadurch gekennzeichnet, dass** der erste Abschnitt (101) aus Polyamid ist und der zweite Abschnitt (102) aus Polyurethan ist.

8. Rolle nach einem der vorhergehenden Ansprüche, **dadurch gekennzeichnet, dass** das Teil (11) durch Doppeleinspritz-Gießformen erhalten wird.

9. Rolle nach Anspruch 1, **dadurch gekennzeichnet, dass**:
• der erste Abschnitt (101) umfasst:
* einen ersten Bereich (111), in dem der Aufnahmesitz (13) verwirklicht ist, wobei dieser erste Bereich (111) zwischen den Aufnahmesitz (13) und den zweiten Abschnitt (102) eingefügt ist, und
* einen zweiten Bereich (112), in dem das Lager (16) verwirklicht ist, wobei der zweite Abschnitt (112) zwischen die axiale Öffnung des Lagers (16) und den zweiten Abschnitt (102) eingefügt ist und die Form einer Hülse hat, dessen mittige Öffnung die axiale Öffnung des Lagers (16) bildet,
• wobei der zweite Abschnitt (102) umfasst:
* eine Muffe, die die Hülse umgibt,
* eine Wand (130), die die Muffe und den Umfang (131) des Teils (11) ohne Unterbrechung verbindet, wobei die Wand im Wesentlichen die Form eines Eckkeils besitzt, dessen kleine Basis mit der Muffe fest verbunden ist, und
* einen zylindrischen Einsatz (140), der den ersten Bereich (111) in Kontakt umgibt, und
• wobei der erste Abschnitt (101) aus Polyamid ist und der zweite Abschnitt (102) aus Polyurethan ist, wobei das Teil (111) durch Doppeleinspritzungs-Gießformen dieser zwei Materialien erhalten wird.

## Claims

1. A castor suitable for running on a surface (Sd), the castor comprising:
• a casing (10) constituted by a molded part (11), said part comprising at least:
• a housing (13) suitable for receiving a pivot (14) defined on a first axis (15); and
• a bearing (16) for a rotary shaft, said bearing being defined on a second axis (17) that is substantially perpendicular to the first axis and substantially parallel to said surface (Sd), said bearing (16) being defined by a surface that is generally of right cylindrical shape defining an axial orifice;
• at least one wheel (20) suitable for making rolling contact with said surface (Sd); and
• a rotary shaft (30) mounted to co-operate in said bearing (16), with said wheel (20) being mounted in association with said rotary shaft;
the castor being **characterized by** the fact that the part (11) is made of at least first and second portions (101 and 102) made respectively of two materials of different flexibilities, the second portion (102) being the portion that is made of the material presenting the greater flexibility and being interposed between the housing (13) and the axial orifice of said bearing (16) so as to isolate the housing and the bearing from each other.

2. A castor according to claim 1, **characterized by** the fact that said first portion (101) comprises a first fraction (111), in which said housing (13) is made, said first fraction (111) being interposed between said housing (13) and said second portion (102), and a second fraction (112), in which said bearing (16) is made, the second fraction (112) being interposed between the axial orifice of said bearing (16) and the second portion (102).

3. A castor according to claim 2, **characterized by** the facts that the second fraction (112) is in the form of a bushing having its central orifice constituting the axial orifice of the bearing (16), and that said second portion (102) is in the form of a sleeve surrounding said bushing.

4. A castor according to claim 3, **characterized by** the fact that said second portion (102) further includes a wall (130) connecting said sleeve to the periphery (131) of said part (11) without discontinuity.

5. A castor according to claim 4, **characterized by** the fact that said wall (130) is substantially in the form of a truncated wedge having its small base secured to the sleeve.

6. A castor according to claim 2, **characterized by** the fact that said second portion (102) is constituted by a cylindrical insert (140) surrounding and in contact with said first fraction (111).

7. A castor according to any preceding claim, **characterized by** the fact that said first portion (101) is made of polyamide and the second portion (102) is made of polyurethane.

8. A castor according to any preceding claim, **characterized by** the fact that the part (11) is obtained by bi-injection molding.

9. A castor according to claim 1, **characterized by** the fact that:
• said first portion (101) comprises:
• a first fraction (111), in which said housing (13) is made, said first fraction (111) being interposed between said housing (13) and said second portion (102); and
• a second fraction (112), in which said bearing (16) is made, the second fraction (112) being interposed between the axial orifice of said bearing (16) and the second portion (102), and being in the form of a bushing having its central orifice constituting the axial orifice of said bearing (16);
• said second portion (102) comprises:
• a sleeve surrounding said bushing;
• a wall (130) connecting said sleeve to the periphery (131) of said part (11) without discontinuity, said wall presenting substantially the shape of a truncated wedge with its small base being secured to the sleeve;
• a cylindrical insert (140) surrounding said first fraction (111) and in contact therewith; and
• said first portion (101) being made of polyamide and said second portion (102) being made of polyurethane, said part (11) being obtained by bi-injection molding of these two materials.
